# EUROPEAN PATENT APPLICATION

(11) **EP 4 821 698 A1**
(43) Date of publication of application: **14.10.2026**
(21) Application number: 25169470.9
(22) Date of filing: 09.04.2025
(51) Int. Cl.: B41J 29/38, B41J 19/00, B41J 19/20, B41J 25/00, F16H 19/06, F16H 7/02, F16H 7/08

(54) **A DRIVE UNIT FOR INDUCING A LINEAR RELATIVE MOTION OF TWO COMPONENT PARTS OF A PRINTER**

(71) Applicant: Canon Production Printing Holding B.V., 5914 HH Venlo (NL)
(72) Inventor: AARTS, Vincent W.J.C.J., 5914 HH Venlo (NL); VAN BOHEEMEN, Stan P., 5914 HH Venlo (NL)
(74) Representative: Canon Production Printing IP Department

(57) **Abstract**

A drive unit for inducing a linear relative movement of a first (10) and a second component part (12) of a printer, the drive unit comprising: a drive roller (14) that is rotatably supported on the first component part (10), and a belt (16) having a curved portion (20) trained around the drive roller (14), and a linear portion (22, 24) that is in contact with the second component part (12) and extends in a direction of the relative movement, characterized in that two clamp rollers (18) are disposed on opposite sides of the drive roller (14) and arranged to clamp the belt (16) against a surface portion of the second component part (12).

## Description

### BACKGROUND OF THE INVENTION

### Field of the invention

The invention relates to a drive unit for inducing a linear relative movement of a first and a second component part of a printer, the drive unit comprising: a drive roller that is rotatably supported on the first component part, and a belt having a curved portion trained around the drive roller, and a linear portion that is in contact with the second component part and extends in a direction of the relative movement.

The first component part may for example be a gantry that carries a printhead that is movable along the gantry in a main scanning direction, whereas the second component part may be a frame of the printer on which a media sheet may be positioned, the gantry be movable relative to the frame in a sub-scanning direction.

### Description of Background Art

In a conventional drive unit of the type specified above, as has been described for example in US 6,123,473 A, the belt is an endless belt that is trained around the drive roller and a deflection roller that is also rotatably supported on the first component part, the first component part being in this case the frame of the printer. The second component part, e.g. a printhead carriage, is attached to one of the two runs of the belt that extends between the drive roller and the deflection roller, so that the printhead carriage may be moved back and forth by driving the drive roller in one or the other direction.

This known drive unit has the drawback that the belt necessarily has a certain modulus of elasticity and will therefore be stretched to some extent when the belt is subject to tensile forces that will inevitably occur when the printhead is accelerated or decelerated. This limits the accuracy with which the relative position of the two component parts can be controlled, in particular in applications where, for the sake of high productivity, the printhead carriage is to be accelerated and decelerated quickly.

As an alternative, the drive unit may take the form of a rack and pinion device in which the rigid rack may be designed to have a high modulus of elasticity. In that case, however, the positioning accuracy is compromised by an inevitable play between the teeth of the rack and the pinion.

### SUMMARY OF THE INVENTION

It is an object of the invention to provide a drive unit that has a low-cost design and is suitable for controlling the relative positions of the component parts with improved accuracy.

It is the insight of the inventors that positioning inaccuracies can result from the ductility of the belt. For larger printers, such as flatbed and/or wide format printers, the component parts, such as the gantry beam are relatively heavy, and require relatively large driving forces to be moved. These driving forces locally act on the belt causing it to deform, for example by stretching. The length of the belt is used for determining the positioning of the component part. The stretching results in positioning inaccuracies it is the further insight of the inventors that the stretching of the belt can be reduced or minimized by having it run via two clamp rollers and the drive roller.

According to the invention, in order to achieve this object, two clamp rollers are disposed on opposite sides of the drive roller and arranged to clamp the belt against a surface portion of the second component part.

For simplifying the description, it shall be assumed here, without intending to limit the scope of the invention, that the first component part is movable relative to a stationary second component part. In the drive unit according to the invention, the belt has two linear portions that extend on opposite sides of the drive roller and determine the range of movement of the first component part relative to the second one. One end of each of these linear portions is clamped against the second component part by one of the clamp rollers. Consequently, when the first component part is accelerated, tension forces will only occur in the curved portion of the belt that extends between the two clamp rollers and passes over the drive roller. Since this portion of the belt will generally be short in comparison to the range of movement of the first component part, the amount of stretching of the belt caused by the tension forces will be negligible, whereas the much longer linear portions of the belt will not be subject to any tensile forces and will therefore not cause any positional inaccuracy.

More specific optional features of the invention are indicated in the dependent claims.

In one embodiment, the belt may be held in frictional engagement with the drive roller. In another embodiment, the belt may be a toothed belt meshing with teeth on the periphery of the drive roller. Then, the portion of the belt that is trained around the drive roller my be kept under tension such that the teeth of the belt are elastically urged into the gaps between the teeth of the drive roller, thereby eliminating any play between the teeth.

The opposite ends of the belt, i.e. the outer ends of the two linear portions, may be firmly attached to the second component member so that the belt is reliably held in position relative to the second component part. In that case, it is also possible to keep the entire belt under tension, with the result that the drive roller and consequently also the first component part and the two clamp rollers are drawn against the surface of the second component part, thereby creating at least a part of the clamping force with which the clamp rollers are urged against the second component part. Although the two linear portions of the belt will be under a certain tension in this embodiment, this tension will be constant, and the length of these linear portions will not change when the first component part is accelerated or decelerated.

In an embodiment in which the first component part rests on an essentially horizontal surface of the second component part, at least a part of the clamping force may also be generated by the weight of the first component part.

### BRIEF DESCRIPTION OF THE DRAWINGS

An embodiment example now will be described in conjunction with the drawings, wherein:
- Fig. 1: is a schematic view of a drive unit according to the invention; and
- Fig. 2: shows the drive unit in a different state.

### DETAILED DESCRIPTION

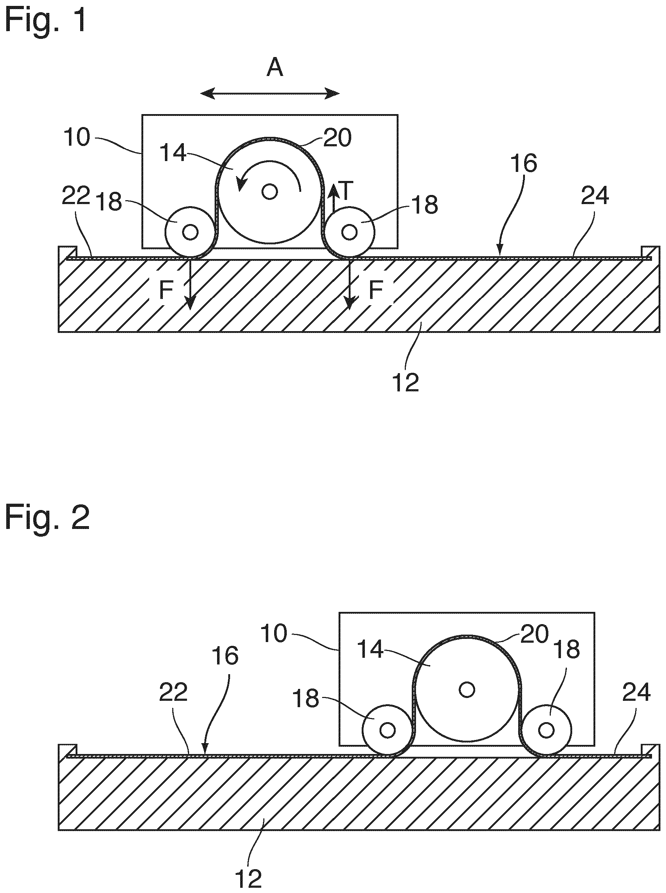

In the example shown in Fig. 1, a first component part 10 of a printer is a gantry that extends in a direction normal to the plane of drawing in Fig. 1 and carries a printhead (not shown) that is movable along the gantry. A second component part 12 of the printer is formed by a frame that has a flat top surface for supporting a media sheet (not shown) onto which an image is to be printed. As has been symbolized by a double-arrow A in Fig. 1, the component part 10 may be driven for a linear movement relative to the component part 12 by means of a drive unit that comprises a drive roller 14 that is rotatably supported on the first component part 10, a belt 16 that has its opposite ends firmly attached to the second component part 12, and two clamp rollers 18 that are rotatably supported on the first component part 10 and disposed on opposite sides of the drive roller 14 so as to clamp the belt 16 against the flat top surface of the second component part 12. Thus, the belt 16 is divided into a curved portion 20 trained around the drive roller 14, and two linear portions 22, 24 that rest flat on the second component part 12.

A certain urging device tends to draw the entire unit formed by the first component part 10, the drive roller 14 and the two clamp rollers 18 against the surface of the second component part 12, the clamp rollers 18 urge the belt 16 against the surface of the second component part 12 with a certain clamping force F. Such an urging device may be formed e.g. of spring elements, actuators, force applicators, linear drives, etc. In addition, the weight of the first component part 10 and/or the tension in the belt may be applied to contribute to the clamping F. When the first component part 10 is to be accelerated into the right in Fig. 1, for example, the drive roller 14 is driven anti-clockwise and the torque applied to the drive roller 14 translates into a tension force T acting on the part of the belt 16 that extends between the right clamp roller 18 and the drive roller 14. The parts of the belt 16 that engage the peripheral surface of the right clamp roller 18 and the peripheral surface of the drive roller 14 may also be subject to a certain tension which will, however, be reduced by friction between the belt and the rollers. Thus, the tension force that acts upon the point of the belt 16 that is clamped between the right clamp roller 18 and the second component part 12 and tends to stretch the linear portion 24 of the belt will in any case be smaller than the tension force T. On the other hand, if the linear portion 24 of the belt would be stretched, this stretching movement would be opposed to by friction between the belt 16 and the second component part 12, the corresponding frictional force being proportional to the clamping force F and to the friction coefficient µ between the belt and the second component part 12. Thus, if the clamping force F is sufficiently high, the friction force will totally counterbalance the tension force acting on the belt in the nip between the clamp roller 18 and the second component part 12. As a result, the tension and the length of the linear portion 24 will not be affected by the torque applied to the drive roller 14.

On the other hand, the tension force T will tend to straighten the part of the belt 16 that extends between the drive roller 14 and the nip between the right clamp roller 18 and the surface of the second component part 12. As a result, the right clamp roller 18 will be pushed to the right in Fig. 1, thereby accelerating the first component part 10 towards the right. Further, friction between the drive roller 14 and the curved portion 20 of the belt gives a rise to a reaction force that tends to move the drive roller 14 and, the first component part 10 to the right. As a result, the first component part 10 will move towards to the right.

In order to balance the forces acting upon the first component part 10, an identical drive unit will be provided at the opposite end of the gantry.

As the first component part 10 moves rightwards, the clamp rollers 18 will roll over the belt 16, with the result that the linear portion 22 becomes longer and the linear portion 24 becomes shorter. However, since the frictional force between the second component part 12 and the belt 16 in the nip between the second component part 12 and the right clamp roller 18 exceeds the belt tension, the tensional force in the linear portion 24 of the belt will not change, and the position of the first component part 10 relative to the second component part 12 will not be altered by any stretching of the linear portion 24.

Fig. 2 illustrates a condition in which the drive unit has moved the first component part 10 by a certain distance towards the right end of the printer.

It will be appreciated that, in a practical embodiment, the length of the linear portions 22 and 24 of the belt 16 may be substantially larger than in the simplified embodiment shown here. Then, any stretching of the linear portions 22 and 24 would give rise to substantial positioning errors that would result in a mismatch between swathes of the printed image that are printed in subsequent passes of the printhead along the gantry. It is therefore a particular advantage of the invention that the linear portions 22, 24 of the belt 16 are only subject to a constant tension or no tension at all so that any stretching of these portions is reliably avoided. If the angular position of the drive roller 14 is taken as a measure for the linear position of the first component part 10 relative to the second, then positional errors could only be caused by stretching of the curved portion 20 of the belt. However, since length of this curved portion 20 and, in particular, the length of the portions that are not an engagement with the drive roller 14 or one of the clamp rollers 18, is very small in comparison to the total length of the belt 16, the positional errors caused by stretching will be negligible.

The positional error may be reduced further if the belt 16 as a whole is pre-tensioned before the ends of the belt 16 are attached to the second component part 12. Typical belt materials have a constant modulus of elasticity as long as the tension forces are small. However, as the tension increases, the modulus of elasticity tends to increase,, with the result that the amount of stretching caused by a given increase in tension will be even smaller.

## Claims

1. A drive unit for inducing a linear relative movement of a first (10) and a second component part (12) of a printer, the drive unit comprising: a drive roller (14) that is rotatably supported on the first component part (10), and a belt (16) having a curved portion (20) trained around the drive roller (14), and a linear portion (22, 24) that is in contact with the second component part (12) and extends in a direction of the relative movement, **characterized in that** two clamp rollers (18) are disposed on opposite sides of the drive roller (14) and arranged to clamp the belt (16) against a surface portion of the second component part (12).

2. The drive unit according to claim 1, wherein the belt (16) is in frictional contact with the periphery of the drive roller (14).

3. The drive unit according to claim 1, wherein the belt (16) is a toothed belt.

4. The drive unit according to any of the preceding claims, wherein the linear portions (22, 24) of the belt (16) rests on a horizontal top surface of the second component part (12), and least a part of a clamping force (F) with which the clamp rollers (18) clamp the belt (16) against the second component part (12) is caused by at least one of the following:
- an urging device for pulling the clamp rollers (18) and the second component part (12) towards one another;
- a weight of the first component part (10); and
- a tension force in belt (16).

5. The drive unit according to any of the preceding claims, wherein the opposite ends of the belt (16) are firmly attached to the second component part (12).

6. The drive unit according to claim 5, wherein the belt (16) is pre-tensioned.
